# EUROPEAN PATENT APPLICATION

(11) **EP 1 447 158 A2**
(43) Date of publication of application: **18.08.2004**
(21) Application number: 04006750.6
(22) Date of filing: 25.01.2001
(51) Int. Cl.: B21K 1/76, C21D 1/34

(54) **Method for producing rack bar**

(62) Divisional of application: 01101581.5
(71) Applicant: Kabushikigaisha Koshingiken, Mishima-shi, Shizuoka-ken (JP)
(72) Inventor: Seiji, Shiokawa, Mishima-shi, Shizuoka-ken (JP)
(74) Representative: HOEGER, STELLRECHT & PARTNER Patentanwälte

(57) **Abstract**

A method for producing a rack bar for a steering mechanism in an automobile. A blank pipe (18) is held in a die (10), which has, at its inner surface, linear toothed portions (12-1). Mandrels (20) are inserted repeatedly to the blank pipe (18) while the direction of the insertion is alternately changed, while the insertion of the mandrel (20) on one side of the blank pipe (18) and the withdrawal of the mandrel (20) on the other side are overlapped. Furthermore, a positive cooling of the die (10) is prevented in such a manner that an increased temperature of the work around 200 °C in a range providing a work softening phenomenon is kept. An increased precision as well as reduced costs are obtained irrespective of a fact that the rack bar is produced under metal forming principle.

## Description

The present invention relates to a method for producing a pipe shaped rack bar from a pipe shaped blank, wherein the blank pipe is held in a die having, at its inner surface, toothed portions along the length of the die and wherein a mandrel having an enlarging head is inserted to the blank pipe, which causes the material to be radially flown toward the die, thereby forming, on the outer surface of the blank pipe, teeth corresponding to the shape of the toothed portions on the die.

In Japanese Examined Patent Publication (kokoku) No. 3-5892, a metal forming technique for producing a pipe shaped rack bar as a component in a steering device is disclosed. In a metal forming process of a rack bar in this patent, a pipe member, which is thermally softened, is held in a die and is subjected to a pressing so that the pipe member is flattened at a location where a rack is to be formed. Then, a die having straight teeth is engaged with the flattened part of the pipe member, while a mandrel is inserted to the central bore of the pipe member. The mandrel is provided with a tapered operating portion, which is engaged with an inner surface of the flattened portion and is forced into the axial bore of the pipe member, which causes the material to be radially outwardly flown into the cavities of the die, thereby forming, on the flattened portion of the pipe member, straight teeth which corresponds to the toothed portions on the formation die.

The metal forming technique disclosed by the Japanese '892 patent is defective in a reduced precision of products, which makes it difficult that the products are actually used for production. Furthermore, the prior art method is defective also in that its production cost is high due to the fact that the process is complicated, on one hand and that, on the other hand, the cost of the metal forming device is high.

In view of the above, an object of the present invention is to provide a technique for a metal forming capable of overcoming above difficulties in the prior art.

The present invention is in the method as described in the first paragraph of this specification characterized in that the die is splitable and is constructed by a first part having the toothed portions and a second part having a rounded surface for supporting the opposed side of the blank pipe, in that the mandrel has a plurality of enlarging heads and in that the insertion to and withdrawal from mandrel are repeated for a predetermined number.

According to the present invention, the mandrel is provided with a plurality of operating heads and the insertion of the mandrel is repeated for a predetermined number. As a result, the radial enlarging operation is done at multistage basis in one complete insertion of the mandrel. As a result, an increased precision of the rack bar can be obtained irrespective of a fact that the rack bar is formed under the metal forming process.

Preferably, the die is, during the metal formation process, kept closed, while preventing the die from being subjected to a positive cooling operation, so that a heat as generated by the metal forming process is maintained so that the temperature of the metal, which can provide so-called work softening phenomenon, is maintained during the execution of the metal forming process.

Due to the fact that the temperature of the metal, which can provide the so-called work softening phenomenon, is maintained, an increased flowability of the metal is maintained irrespective of a fact that the insertion of the mandrel to the blank pipe is repeated. Thus, the metal forming process according to the present invention can obtain a highly increased precision of the rack bar as fine as 32 µm.

Preferably, the insertion of the mandrel is alternated between the opposed direction and that the insertion of the mandrel on one end of the blank pipe and the withdrawal of the mandrel on the other end of the blank pipe are overlapped.

As a result of the alternately changed direction of the insertion of the mandrel to the blank pipe with the overlapping operation, any occurrence in the segregation of the material as well as time hardening are prevented, thereby obtaining an increased precision of the teeth of the produced rack bar.

Preferably, a plurality of sets of vertically shifted mandrels of different operating diameters are provided, and in that the insertion of the mandrels is done while vertically shifting the mandrels.

As a result of the vertical shifting of the mandrel of gradually changed operating diameters, multi-stage working is done while gradually changing the working diameter, thereby increasing the precision of the rack bar.

Now, the present invention will be explained with reference to attached drawings in which:
Fig. 1 illustrates schematically a rack bar forging by an alternate and repeated insertion of mandrels to a blank pipe according to the present invention.
Fig. 2 is a transverse cross-sectional view of a die assembly used in the device in Fig. 1.
Fig. 3 is a longitudinal cross-sectional view of the die assembly taken along a line III-III in Fig. 2.
Fig. 4 is a bottom view of an upper split die taken along a line IV-IV in Fig. 3.
Fig. 5A illustrates an enlarged cross sectional view of the die assembly when the latter is under an opened condition.
Fig. 5B illustrates an enlarged cross sectional view of the die assembly when the latter is under a closed condition for flattening the blank pipe.
Fig. 5C illustrates an enlarged cross sectional view of the die assembly when a mandrel is inserted to a blank pipe held by the die assembly.
Fig. 6 is a graph illustrating relationship between shearing strain and shearing.
Fig. 7 is a graph illustrating relationship between temperature and deformation resistance in a carbon steel.
Fig. 8A illustrates a flow pattern of material during a rack bar forging process by an insertion of a mandrel to a blank pipe in the present invention.
Fig. 8B illustrates a flow pattern of material during a rack bar forging process by an insertion of a mandrel to a blank pipe in a prior art.

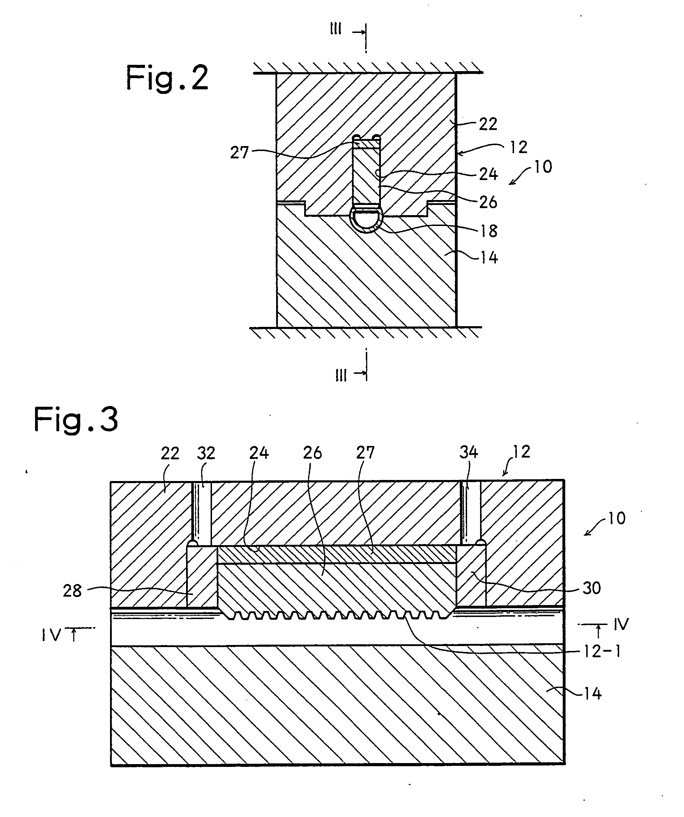

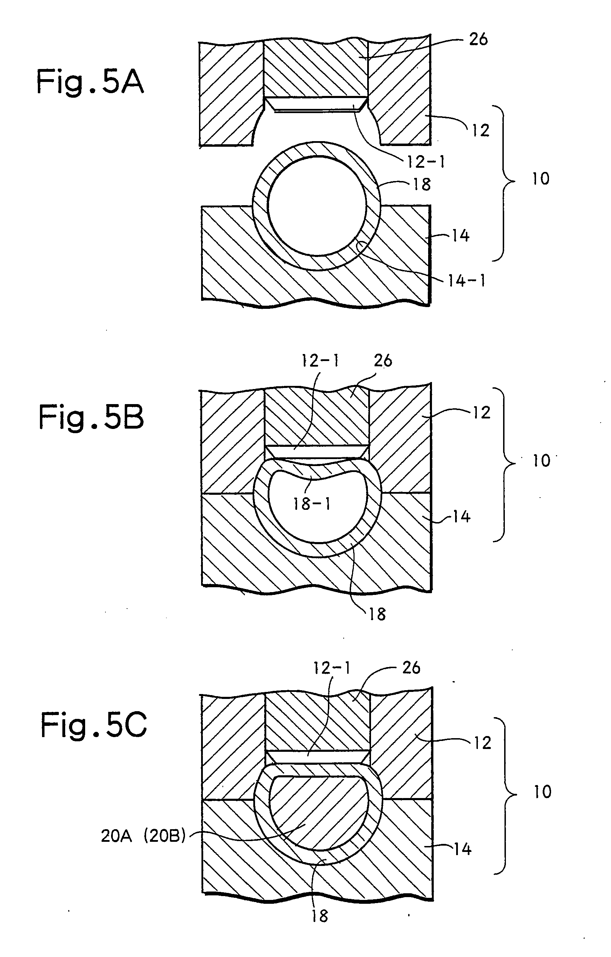

As shown in Figs. 2 and 3, a die assembly 10 is constructed by an upper die 12 and a lower die 14. Fig. 5A illustrates the die assembly 10 when it is under an opened state while Fig. 5B illustrates the die assembly 10 when it is under a closed state. The upper die 12 has, at its inner surface, a longitudinal recess on which toothed portions 12-1 of a shape of a rack is formed. The lower die 14 is, at its upper surface faced with the upper die 12, formed with a longitudinal surface 14-1 of a semicircular cross sectional shape. Fig. 5A illustrates a state where a blank pipe 18 (work) is rested on the rounded surface 14-1 of the lower die 14.

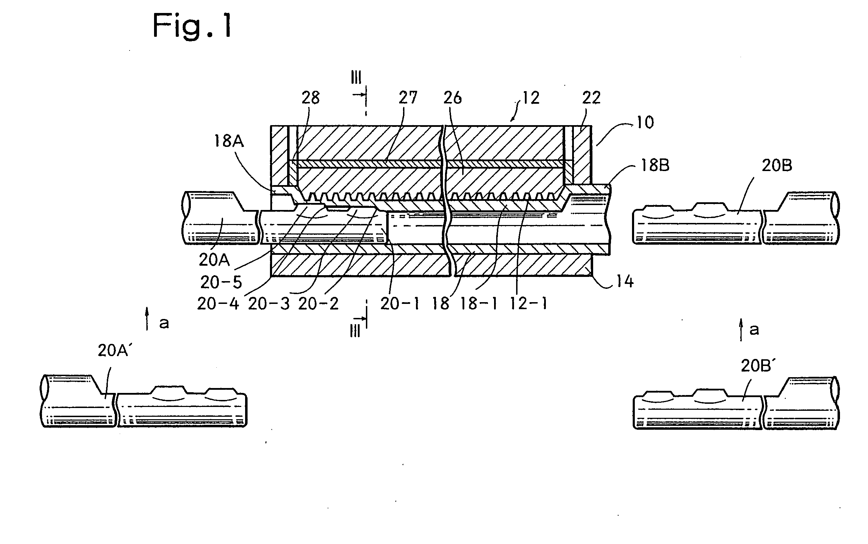

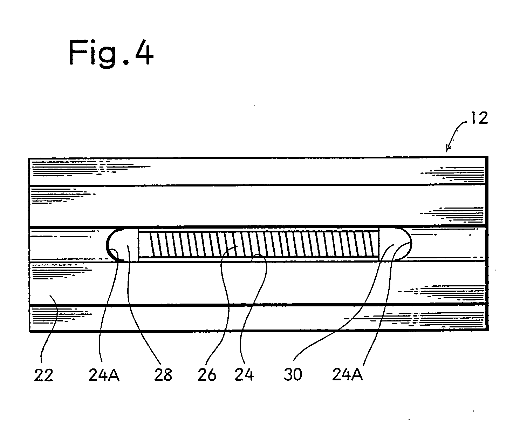

In Figs. 1 to 4, the die assembly 12 has a holder 22. The holder is formed with a rectangular shaped recess 24, in which a toothed die 26 is arranged. At the top of the recess 24 of the holder 22, a metal liner 27 is arranged. A pair of press fit pieces 28 and 30 are arranged at longitudinal ends of the toothed die 26. As shown in Fig. 4, the recess 24 has a rounded portion 24A of a diameter, which is equal to the width of the recess 24. Furthermore, the press fit pieces 28 and 30 are formed with a rounded cross sectional shape which correspond to that of the recess 24A. Furthermore, at least one of the press fit pieces 28 is of a slightly wedge shaped, which allows the toothed die 26 to be held in the rectangular recess 24 of the holder 22 when the press fit of the pieces 28 and 30 to the recess 24 is done. A press fitting of the pieces 28 and 30 causes the toothed die 26 to be axially engaged with the rectangular shaped recess 24A, thereby firmly holding the toothed die 26 in the holder 22.

From an opened position as shown in Fig. 5A, the upper and lower dies 12 and 14 are moved toward each other to a closed position as shown in Fig. 5B. In this closed position, the blank pipe is, at its upper part 18-1 facing the upper die 12, flattened to an odd-shaped cross section. The flattened pipe 18 is, then, subjected to a metal forming process for obtaining a rack bar.

In the embodiment of the present invention as explained with reference to Figs. 1 to 5, the flattening of the upper surface of the blank pipe 18 on which the rack teeth are formed is obtained when the upper and lower dies 12 and 14 are combined, i.e., the die assembly 10 is closed. Namely, upon the closure of the die assembly 10, the toothed portion 12-1 of the upper die 12 is located at a distance from the bottom surface of the recess of the lower die 14, which is larger than the half of the diameter of the blank pipe 18. As a result, the blank pipe 18 is, at its upper portion 18-1, the collapsed or flattened by the engagement of the toothed portion 12-1 with the pipe 18, as illustrated in Fig. 5B. As a result, a subsequent metal forming process for obtaining a rack bar can be commenced while keeping the closed position of the die assembly 10. In other words, "seamless" or integrated operation from the pipe flattening to the rack bar forming can be realized according to the present invention.

Again in Fig. 1, the partially flattened pipe 18, which is held between the split die members 12 and 14, is subjected to a metal forming process according to the present invention. Now, a detail of the rack formation under the metal forming principle will be explained. In Fig. 1, astride the die assembly 10 in which the partially flattened pipe 18 is held an axially opposite pair of mandrels 20A and 20B are arranged. Each of the mandrels 20A and 20B has a transverse cross sectional shape which corresponds to that of the partially flattened blank pipe 18 as shown in Fig. 5c. As shown in Fig. 1, the mandrel 20A (20B) is, at its leading end, formed with a guide portion 20-1, which assists the mandrel to be smoothly introduced into the pipe 18. Adjacent the guide portion 20-1, the mandrel 20A (20B) is formed with a taper portion (enlarging head) 20-2, which is followed by a first radially enlarged portion.

Upon the penetration of the mandrel 20A (20B) into the pipe 18, the taper portion 20-2 is engaged with the flattened portion 18-1 of the pipe 18. As a result, a plastic deformation is occurred so that the metal is flown into the recesses between the toothed portions 12-1 of the toothed die 26. As result, teeth, corresponding to the toothed portions 12-1 on the die 26, are created on the flattened portion 18-1 of the blank pipe 18. According to the present invention, the mandrel 20A (20B) is, at location downstream from the first radially enlarged portion 20-3, formed with a tapered portion 20-4, which is followed by a second radially enlarged portion 20-5. As a result, sequential, two or multi stage metal flows are obtained by a single penetration of the mandrel 20A (20B).

In Fig. 1, the mandrel 20A on the left-hand side is in a condition that its first time penetration into the blank pipe 18 has just been initiated. The penetration of the mandrel 20A is continued until a condition is obtained that the second radially enlarged portion 20-5 passes the end of the flattened part 18-1 of the blank pipe 18 in the right-hand side. Then, the mandrel 20A effects a return movement until a condition is obtained that the mandrel 20A is fully withdrawn from the pipe 28.

In Fig. 1, an insertion of the right-hand mandrel 20B into the blank pipe 18 can be commenced prior to the completion of the return movement (withdrawal) of the left-hand mandrel 20A from the pipe 18. The movement of the right-hand mandrel 20B is continued until the latter passes the left-hand end of the flattened portion 18-1 of the blank pipe 18. In the similar way as explained with reference to the left-hand mandrel 20A, the insertion movement of the mandrel 20B causes a metal flow to be obtained by its radially expanded portions. Then, the right-hand mandrel 20B effects its return movement in the right-hand direction in Fig. 1. Prior to the completion of the return movement of the right-hand mandrel 20B, the insertions movement of the left-hand mandrel 20A is commenced.

In the above mentioned operation of the mandrels 20A and 20B, the insertion movement of one of the mandrels 20A and 20B is commenced prior to the completion of the return movement of the other mandrel. In other words, there is an "overlapping" between the insertion movement of one of the mandrels 20A and 20B and the return movement of the other mandrel. The alternate inserting movements between the mandrels 20A and 20B while effecting above mentioned "overlapping" are repeated for a predetermined number.

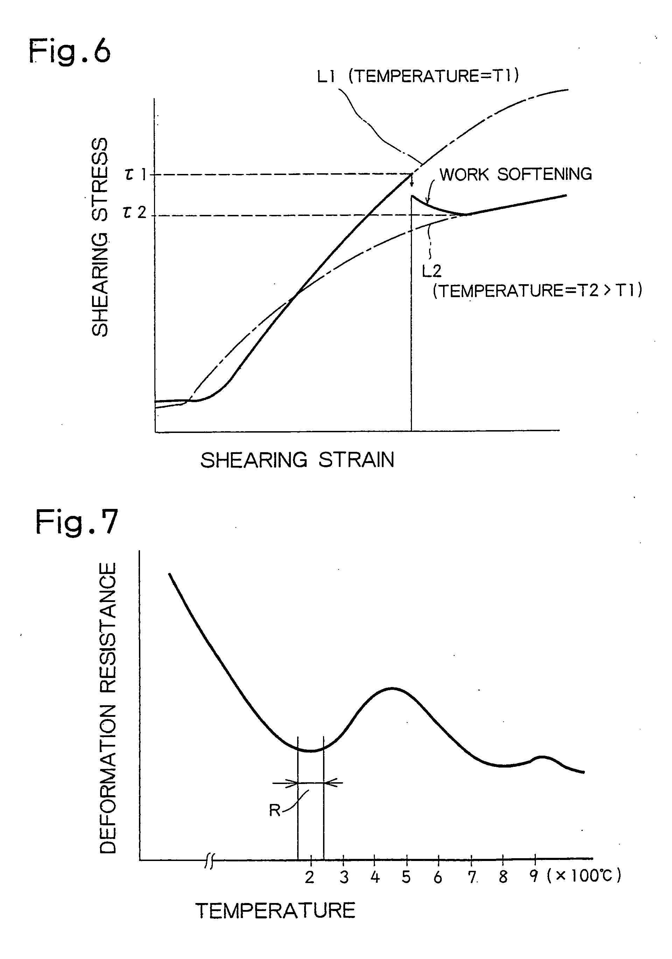

The penetration of the mandrels 20A and 20B to the blank pipe 18 causes the metal to be flown into cavities between the toothed portions 12-1, thereby forming, on the blank pipe 18, teeth which are complimentary with the toothed portions 12 1 on the die 26. Such a metal forming or forging process causes the heat to be accumulated, thereby increasing the temperature of the material. It is a common sense of those who skilled in the art that a working of the metal causes the material to be hardened, i.e., so-called hardening phenomenon is generated. Contrary to this according to the present invention, a work softening phenomenon, which occurs at a region of temperature of 200 °C is used in the present invention. Namely, in Fig. 6, an abscissa designates a shearing stress and an ordinate designates a shearing stress. A relationship between the shearing strain and shearing stress under a constant temperature T₁ is illustrated by a line L1. As illustrated by the line L1, an increase in the shearing strain causes, initially, the shearing stress to be linearly increased. The increase in the stress is, at a stress value of τ1 (so-called critical shearing stress), slow down due to an occurrence of a cross slip. At an area around the critical shearing stress, an increase in the temperature from T₁ to T₂ causes the stress to be reduced. Finally, the shearing stress is increased along the curve L₂, which is a stress-strain elationship at the temperature T₂. Such a phenomena of a decrease in the stress in accordance with the increase in the strain is called as a work softening. In Fig. 7, in a condition of a deformation rate in a range between 10 to 100/sec, an abscissa is a temperature while an ordinate is a deformation resistance for a carbon steel. At range R of temperature around 200° C corresponding to the temperature range of the work softening, a local reduction in deformation resistance is obtained. According to the present invention, the temperature of the material in the range R as solely generated under the execution of the metal forming process is maintained. As a result, a flowability of the material is increased. As a result, irrespective of a production of the rack bar under the forging principle, an increased precision as fine as an order of microns is obtained. In this specification, such a metal forming process at the area around the work softening point of a temperature about 200° C as generated solely by the execution of the metal forming process without imparting any outside heat is referred as a semi-work working process. An exact area of the values of the temperature suitable for an execution of such a quasi-warm working process depends, of course, on the types of the material. However, for typical steel material for the production of a rack bar, the temperature is around 200° C. In order to keep a condition for the quasi-warm processing, any outside heating device is unnecessary. A measure is, however, essential for preventing the die assembly as well as the mandrel from being excessively cooled. Namely, an ejection a cooling liquid (lubrication liquid) during the execution of the metal forming process is prevented as far as the die assembly is concerned. On the other hand, as far as the mandrel is concerned, a supply of the lubricating fluid is done only at the waiting operation after the retraction from the die assembly. As a result of such limited lubrication or cooling, the material is kept under the temperature at the quasi-warm processing process.

Furthermore, according to the present invention, the mandrels 20A and 20B are subjected to the overlapping operation. In other words, after the commencement of the return movement of one of the mandrels 20A and 20B and prior to the finish of its return movement, a movement of the other mandrel for effecting an insertion operation is commenced. Such an overlapping operation is, first, important from the viewpoint for keeping the semi-warm processing condition. Namely, an excessive temperature drop will be arisen if an insertion of a mandrel in one direction is waited until completion of the withdrawal of a previously inserted mandrel in the opposite direction. The overlapping operation according to the present invention is, also, important from the viewpoint that a time shortening is obtained for preventing an age hardening phenomenon from being generated. Namely, an execution of a metal forming process causes the material to be usually subjected to an age hardening effect. Such an age hardening is, usually, commenced within a time period as short as 1 or 2 minutes. In usual construction of a power steering mechanism for an automobile, the length of the rack bar is in a range between 600 to 800 mm. In order to produce such a rack, a mandrel of a length as long as 1,000 mm is needed. In such a length of the mandrel, an age hardening phenomenon may inevitably be arisen so long as an insertion of the second mandrel is commenced after the completion of the withdrawal of the first mandrel. The above mentioned overlapping operation of the mandrels 20A and 20B can effectively control the age-hardening phenomenon which may occur within a time of minutes. According to the present invention, the mandrel overlapping operation is combined with the quasi-warm working. As a result, an increased flowability of the metal is obtained during the execution of the metal forming process by an insertion of the mandrels 20A and 20B to the blank pipe 18. Such an increase flowability of the material is, according to the present invention, combined with the repeated and alternated insertion of the mandrels 20A and 20B in the opposite direction. As a result, an increased precision of the product (rack bar) as fine as the order of 32 µm irrespective of a fact that the rack bar according to the present invention is essentially of a forged product.

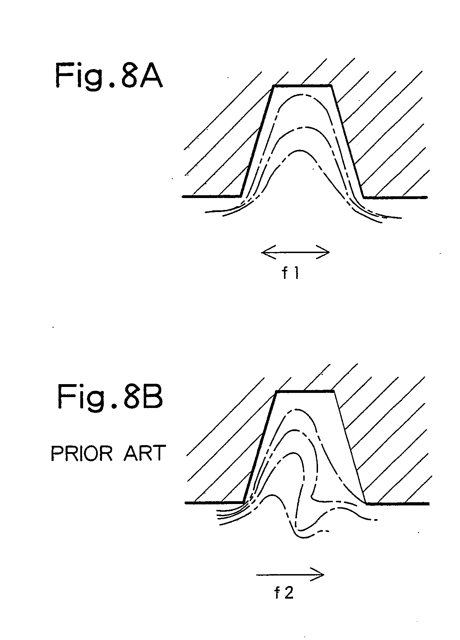

In addition to the advantages of the above defined semi-warm working processing as well as a restriction of the age-hardening phenomenon, the alternate insertion of the left-hand and right-hand mandrels 20A and 20B can advantageously correct any segregation in the flown material. In other words, as a result of alternate insertions between the left-hand and right-hand mandrels 20A and 20B, an uniformly distributed flow of the metal is obtained in the recesses of the toothed die 26, thereby obtaining forged products (rack bars) of an increased precision. Figs. 8A and 8B show schematically flow patterns of material during the metal forming process which are interpreted from X-ray crosssectional photographs of a tooth of a rack bar as obtained by the metal forming process according to the present invention. In Fig. 8A, where the mandrel is subjected to an alternate reciprocation as shown by an arrow f₁, a symmetrical flow pattern is obtained. In Fig. 8B, where the mandrel is subjected to an insertion in a single direction as shown by an arrow f₂; a flow of the material is non-symmetrical and a rolled flow of the material is obtained. In the non-symmetrical flow of the material as shown in Fig. 8B, non-uniform residual stress is likely in the produced rack bar, resulting in a location to location non-uniform value of spring-back amount, which may cause the precision as well as the strength of the teeth to be reduced.

Referring back to Fig. 1, a vertical shifting operation of the mandrels 20A and 20B will now be explained. On the left side of the die assembly 10, a set of vertically spaced mandrels are provided, although only two mandrels 20A and 20A' are shown in Fig. 1 for the sake of the simplicity. In the similar way, on the right side of the die assembly 10, a set of vertically spaced mandrels 20B and 20B' is provided. Such an arrangement of vertically spaced mandrels is for a progressively increased degree of working. In other words, along the shift direction, i.e., the vertical direction, the working diameters of the mandrel are progressively varied (increased). These mandrels in the shifting direction (vertical direction) are arranged on respective left-hand and right-hand stackers not shown in Fig. 1 in such a manner that a working is done while vertically shifting the mandrel stackers. Namely, a first stage working is done wherein the mandrels 20A and 20B are alternately inserted. After the completion of the first stage working by the mandrels 20A and 208, an upward movement of holders (not shown) of the respective left-hand and right-hand stackers as shown by arrows a is executed in such a manner that the mandrels 20A' and 20B' for the second stage working is aligned with the blank pipes 18. Then, the second stage working is done wherein the mandrels 20A' and 20B' are alternately inserted to the blank pipes 18. In the similar way, the working of later stages is done while executing the vertical shifting of the mandrels. Such a multi-stage working while changing progressively the working diameter is desirable in that a deeply recessed pattern of an increased precision can be obtained on a blank pipe of a reduced wall thickness.

## Claims

1. A method for producing a pipe shaped rack bar from a pipe shaped blank, wherein the blank pipe is held in a die having, at its inner surface, toothed portions along the length of the die, wherein a mandrel having an enlarging head is inserted to the blank pipe, which causes the material to be radially flown toward the die, thereby forming, on the outer surface of the blank pipe, teeth corresponding to the shape of the toothed portions on the die, wherein the die is splitable and is constructed by a first part having the toothed portions and a second part having a rounded surface for supporting the opposed side of the blank pipe, wherein the mandrel has a plurality of enlarging heads and wherein the insertion to and withdrawal from mandrel is repeated for a predetermined number, wherein the die is, during the metal formation process, kept closed, while preventing the die from being subjected to a positive cooling operation, so that a heat as generated by the metal forming process is maintained so that the temperature of the metal, which can provide so-called work softening phenomenon, is maintained during the execution of the metal forming process.

2. A method according to claim 1, wherein the direction of the insertion of mandrel is alternately changed.

3. A method according to claim 1, wherein the insertion of the mandrel on one end of the blank pipe and the withdrawal of the mandrel on the other end of the blank pipe are overlapped.

4. A method according to claim 1, wherein a plurality of vertically shifted mandrels of different operating diameters are provided, and in that the insertion of the mandrels is done while vertically and progressively shifting the mandrels.
